# FASCICULE DE BREVET EUROPEEN

(11) **EP 0 668 252 B1**
(45) Date de publication et mention de la délivrance du brevet: **05.01.2000**
(21) Numéro de dépôt: 95400299.4
(22) Date de dépôt: 14.02.1995
(51) Int. Cl.: C04B 30/02

(54) **Procédé de fabrication d'un matériau isolant thermique à base de fibres de silice**
Verfahren zur Herstellung eines Wärmeisolierungsmaterials aus Siliciumdioxidfasern
Process for manufacturing heat-insulating material based on silica fibres

(30) Priorité: 17.02.1994 FR 9401825
(43) Date de publication de la demande: 23.08.1995
(73) Titulaire: AEROSPATIALE Société Nationale Industrielle, 75781 Paris Cédex 16 (FR); VIAM ALL Russian Institut of Aviation Materials, 107005 Moscou (RU)
(72) Inventeur: Belunova, Ludmila Vassilievna, 125422 Moscou (RU); Gribkov, Vladimir Nikolaevich, 125040 Moscou (RU); Chernyak, André Iossiphovich, 101000 Moscou (RU); Mizyurina, Galina Timotheivna, 105118 Moscou (RU); Mordovin, Oleg Alexeevich, 111020 Moscou (RU); Mukhanova, Elena Ephimovna, 117246 Moscou (RU)
(74) Mandataire: Lhuillier, René

(56) Documents cités:
- EP-A- 0 506 162
- EP-A- 0 522 900
- DE-A- 3 942 528
- DE-U- 8 413 614
- FR-A- 2 684 369
- GB-A- 2 250 996
- DATABASE WPI Week 9127 Derwent Publications Ltd., London, GB; AN 91-198651 & JP-A-03 124 865 (HONSHU PAPER MFG KK) , 28 Mai 1991

## Description

La présente invention concerne de façon générale la fabrication de matériaux isolants thermiques fibreux, légers, qui sont principalement utiles pour isoler thermiquement des sondes orbitales de navettes spatiales de rentrée dans l'atmosphère, et de façon générale des véhicules spatiaux ou des capsules spatiales.

Les caractéristiques exigées pour de tels matériaux comprennent la possibilité d'être utilisés à des températures de 1200 à 1500°C, une masse volumique et une conductivité thermique aussi faibles que possible, une résistance à la compression, à la flexion et à la traction, une résistance aux chocs thermiques par réchauffement ou refroidissement, une résistance aux fortes vibrations acoustiques et d'autres caractéristiques encore, les plus élevées possibles.

Une première génération de matériaux isolants thermiques réutilisables comprenait des systèmes faiblement frittés, fibreux tels que les systèmes de type Lockheed Insulation (LI) portant les dénominations commerciales LI-900, LI-1500 et LI-2200 et présentant des masses volumiques de 144 kg/m³ (0,144 g/cm³), 240 kg/m³ (0,240 g/cm³) et 352 kg/m³ (0,352 g/cm³), respectivement, lesquels matériaux sont constitués de fibres de silice.

Selon la méthode connue, ces matériaux étaient fabriqués en formant, dans un mélangeur en V, une suspension comprenant des fibres de silice ayant un diamètre de 1 à 3 µm et de l'eau purifiée sur des résines échangeuses d'ions, en présence d'amidon, d'ammoniac gazeux et d'un agent tensio-actif, en versant ensuite cette suspension dans un moule rectangulaire à fond perforé et parois latérales, puis en comprimant légèrement la suspension dans le moule avec élimination partielle d'eau. Le lingot cru ainsi obtenu était ensuite séché à des températures allant jusqu'à 105°C (220°F), cuit à des températures allant jusqu'à 1260°C (2300°F) et le lingot fritté résultant était usiné pour obtenir les dimensions et la forme finales souhaitées.

Les principaux désavantages des matériaux identifiés ci-dessus étaient : un retrait important de près de 25 % (retrait linéaire) après 16 heures à 1250°C, en liaison avec la faible résistance thermique des fibres et une résistance ou ténacité non supérieure à 0,08 MPa en tension selon la direction "faible" pour le matériau présentant une masse volumique de 144 kg/m³, à cause du frittage faible des fibres pour former le squelette.

Une deuxième génération des matériaux en question, appelés FRCI (Fibrous Refractory Composite Insulation : isolation par composite réfractaire fibreux), ne présentait pas de tels désavantages. Leur résistance était améliorée par l'intensification du processus de frittage à l'aide d'additifs contenant du bore, facilement fusibles. De plus, la tendance inévitable dans ce processus à un retrait supplémentaire était compensée ou neutralisée par l'introduction, dans le système, de fibres plus réfractaires en aluminoborosilicate, de type "Nextell®-312". Ceci étant, la base principale du procédé était la même que dans le procédé de fabrication des matériaux de type LI, si ce n'est que le plus grand diamètre (11 µm) de la fibre de "Nextel®" torsadée introduite gênait sa dispersion et qu'il était difficile de réaliser le matériau avec une structure homogène.

La troisième et dernière génération de matériaux du type en question est consituée par les matériaux dits HTP (High Thermal Performance : haute performance thermique) et AETB (Alumina Enhanced Thermal Barrier : barrière thermique augmentée par de l'alumine).

Les matériaux HTP de différentes sortes et masses volumiques comprennent la combinaison de fibres de silice et de fibres d'alumine ayant un diamètre de 3 µm.

Le matériau AETB est une composition à trois composants comprenant des fibres de silice, des fibres d'aluminoborosilicate de 3 µm et des fibres d'alumine de 3 µm. Dans l'un et l'autre cas, le frittage des fibres pour former le squelette est réalisé grâce à la présence d'anhydride borique facilement fusible qui est formé à partir du bore ou de ses composés lors de la cuisson.

En raison du rapprochement des paramètres géométriques des fibres de silice et des fibres céramiques, les matériaux de la troisième génération fournissaient un mélange plus homogène des ingrédients, une uniformité de la macro- et de la microstructure et moins de dispersion des propriétés.

Malgré leurs caractéristiques positives, les matériaux des deuxième et troisième générations présentent un désavantage commun, à savoir qu'il est difficile de combiner les ingrédients d'un système à 2 ou 3 composants, ce qui conduit à une structure et des propriétés non homogènes, de plus apparaît la probabilité de contraintes internes élevées en raison du fait que les coefficients de dilatation thermique et d'autres propriétés des fibres de silice et des fibres céramiques sont différents. Le fait que les fibres céramiques de types "Nextel®" et "Saffil®" utilisées soient beaucoup plus coûteuses que les fibres de silice, et que par conséquent le prix du produit final augmente beaucoup, est également important.

La présente invention a pour but de fournir un matériau à base de fibres de silice, à un composant, plus simple dans sa composition et sa technologie de fabrication, matériau dont les propriétés sont les mêmes que celles des matériaux de types FRCI, HTP et AETB.

Ce but est atteint selon l'invention grâce à l'utilisation, en tant qu'ingrédient fibreux, d'une fibre de quartz qui est formée par pulvérisation de quartz. Cette fibre est prédispersée dans l'eau jusqu'à la formation d'une suspension coulante homogène, à partir de laquelle un bloc fibreux est moulé avec élimination partielle, simultanée, d'eau. Ensuite, on prépare une émulsion aqueuse d'un liant organique au silicium, d'un agent tensio-actif et d'un adjuvant de frittage. Le bloc fibreux cru est dispersé dans l'eau et mélangé avec l'émulsion aqueuse susmentionnée. La suspension ainsi formée est moulée en un lingot cru. L'élimination de l'eau se fait par aspiration sous vide. On règle la hauteur du lingot à la valeur requise par compression à l'aide de plaques perforées puis on le sèche, à l'état comprimé, à une température allant jusqu'à 300°C. Ensuite, le lingot est démoulé et cuit à des températures élevées.

Plus précisément, l'invention a pour objet un procédé de fabrication d'un matériau isolant thermique selon les caractéristiques de la revendication 1.

Il est préférable de disperser la fibre dans un mélangeur pourvu d'un agitateur à hélice à axe décalé, avec une vitesse de rotation de l'agitateur de 2000 à 3000 tr.min⁻¹ et à une concentration de la fibre dans l'eau de 1 à 5 % en volume. On choisira la concentration de la fibre dans cette gamme en fonction de la masse volumique requise pour le matériau final.

Avantageusement, le bloc fibreux est moulé dans un moule pourvu d'un fond perforé, à partir duquel on évacue l'eau sous un vide de 0,01 à 0,04 MPa.

Comme liant organique au silicium, on peut choisir une solution alcoolique de polyéthoxysiloxane, dont la quantité, évaluée en tant que SiO₂, est telle qu'elle soit de 5 à 25 % en poids par rapport au poids de fibre de quartz.

En tant qu'adjuvant de frittage contenant du bore, il est préférable d'utiliser de la poudre de bore amorphe ayant un diamètre moyen des particules de 0,5 à 2,0 µm, laquelle est au préalable traitée par une solution à une concentration de 0,5 à 3,0 % en poids de triméthylchlorosilane dans un solvant organique tel que le toluène, puis séchée à une température allant jusqu'à 300°C.

L'agent tensio-actif utilisé est de préférence non ionique.

De préférence, l'émulsion est formée en mélangeant dans l'eau : la solution alcoolique de polyéthoxysiloxane, l'agent tension-actif et la poudre de bore amorphe, dans un mélangeur pourvu d'un agitateur à hélice, avec une vitesse de rotation de l'agitateur de 2500 à 4000 tr.min⁻¹, pendant 1 à 2 minutes. On choisit de préférence une quantité de bore dans l'émulsion ayant une valeur de 0,5 à 2,5 % en poids par rapport au poids de fibre.

Le mélange du bloc fibreux cru dispersé dans l'eau avec l'émulsion formée peut être réalisé dans un mélangeur muni d'un agitateur planétaire ayant une vitesse de rotation de 50 à 150 tr.min⁻¹, avec une concentration en fibre de 1,5 à 6,0 % en volume. De préférence, la hauteur du lingot moulé, cru est diminuée d'une valeur allant jusqu'à 10 % de la hauteur initiale, par légère compression entre des plaques perforées.

La cuisson à température élevée est effectuée en conformité avec les exigences de pureté qui excluent la cristallisation de la fibre de quartz.

Selon le procédé indiqué ci-dessus, il est possible de fabriquer un matériau présentant une masse volumique dans la gamme de 100 à 400 kg/m³ (0,10 à 0,40 g/cm³) et présentant une macro- et une microstructure uniformes. Si l'on souhaite obtenir des modifications du degré d'orientation de la fibre, la concentration de la fibre doit être modifiée, dans la gamme indiquée ci-dessus de 1,5 à 6 % en volume, pendant le mélange dans un mélangeur avec de faibles vitesses de rotation de l'agitateur.

L'indice principal de résistance du matériau (notamment dans les utilisations en tant que bouclier thermique réutilisable) est la résistance à la traction dans la direction "faible", c'est-à-dire perpendiculairement au plan de moulage qui est, en moyenne, de 0,32 à 0,36 MPa pour une masse volumique de 120 kg/m³ (0,120 g/cm³), de 0,43 à 0,48 MPa pour une masse volumique de 144 kg/m³ (0,144 g/cm³), de 0,65 à 0,70 MPa pour une masse volumique de 200 kg/m³ (0,20 g/cm³), etc..., l'augmentation relative de cette résistance étant de l'ordre de 1,5 fois celle de la masse volumique.

Le retrait linéaire moyen est dans la gamme de 4 à 8 % après 36 heures à 1250°C dans des conditions isothermes et ne dépasse pas un maximum de 14 %. Le matériau avec une masse volumique de 144 kg/m³, après chauffage sur un côté à une température allant jusqu'à 1550°C pendant deux cycles de 20 minutes chacun, présente un retrait linéaire ne dépassant pas 0,6 à 0,8 % dans la zone la plus chauffée.

Le matériau selon l'invention est très résistant à la cristallisation. Lors du chauffage jusqu'à 1250°C pendant 36 heures, la teneur en cristobalite α ne dépasse pas 0,5 à 1,0 % en poids. En pratique, la conductivité thermique des matériaux présentant les différentes masses volumiques susmentionnées et soumis aux conditions de température et de pression de l'air susmentionnées, est la même (dans les limites des erreurs de mesure) que celle du matériau de type LI et des autres variantes de ce type.

Par conséquent, compte tenu des propriétés qu'il présente lors de son utilisation et d'autres propriétés importantes qu'il possède, le matériau à un seul composant fibreux, obtenu à partir de fibres de quartz, selon l'invention qui est fabriqué par le procédé décrit plus haut n'est en rien inférieur aux matériaux à plusieurs composants fibreux à base de silice et de fibres céramiques plus coûteux, fabriqués par des procédés plus complexes.

L'invention sera décrite plus en détail à l'aide des exemples non limitatifs qui suivent.

### Exemple 1 :

190 g de fibres de quartz obtenues selon la technique TU 6 11 15191 87, commercialisées sous la dénomination de "Fibres de Superquartz CKB®" et présentant un diamètre moyen de 1,5 µm sont placées dans un mélangeur pourvu d'un agitateur à hélice à axe décalé. On verse 6 litres d'eau distillée dans le mélangeur (la concentration des fibres est ainsi de 1,45 % en volume). La dispersion est réalisée à une vitesse de rotation de l'agitateur de 3000 tr.min⁻¹, jusqu'à ce que la masse dispersée soit transformée en une suspension coulante uniforme. Cette suspension est versée dans un moule à fond perforé, lequel est soumis par le bas, pendant 2 minutes, à un vide de 0,02 MPa. Le bloc moulé est extrait du moule, est pesé pour déterminer la quantité d'eau résiduelle et est mis dans un mélangeur pourvu d'un agitateur planétaire à ancre et à rotation lente. On ajoute de l'eau dans le mélangeur pour amener la quantité totale d'eau à 2,1 l (en tenant compte de l'eau résiduelle). La suspension ainsi obtenue est mélangée pendant 1 minute à une vitesse de rotation de l'agitateur de 100 tr.min⁻¹.

Dans un mélangeur de plus faible capacité pourvu d'un agitateur à hélice à rotation rapide, on verse 38 % en poids d'une solution comprenant 46 g de polyéthoxysiloxane (15 % en poids de silice par rapport au poids de fibres) et 85 ml d'alcool éthylique.

A cette solution, on ajoute : 1,9 g (1 % en poids par rapport au poids de fibres) de poudre de bore amorphe présentant une taille moyenne des particules d'environ 1 µm, 3 g d'agent tensio-actif (Synthenol® DC10 : agent tensio-actif non ionique, à base d'éthers de monoalcools et de polyéthylèneglycol, dérivés d'alcools acycliques) et 0,25 l d'eau distillée. La poudre de bore utilisée a été au préalable séchée à l'air pendant 2 heures à 200°C, puis traitée par une solution à 1 % en poids de triméthylchlorosilane dans le toluène et enfin séchée de nouveau à l'air pendant 3 heures à 250°C.

Le mélange décrit ci-dessus est émulsionné pendant 1 minute à une vitesse de rotation de l'agitateur de 3000 tr.min⁻¹. Après cela, on verse 1,05 l d'eau dans l'émulsion et on la mélange encore pendant 30 secondes à une vitesse de 3000 tr.min⁻¹.

L'émulsion ainsi obtenue est versée dans un mélangeur à rotation lente et est mélangée avec les fibres dispersées, pendant 30 secondes, à une vitesse de rotation de l'agitateur de 100 tr.min⁻¹ ; la concentration des fibres est de 2,5 % en volume. La suspension résultante est transférée dans un moule présentant une section transversale carrée de dimensions 200 x 200 mm.

Le moule est pourvu d'un fond perforé ; il est soumis par le bas, pendant 2 minutes, à un vide de 0,02 MPa. Le lingot moulé est enserré, par le dessus et le dessous, selon ses grandes surfaces planes, entre des plaques d'acier perforées et l'espace entre les plaques, c'est-à-dire la hauteur du lingot, est amené mécaniquement à 40 mm. Le lingot enserré est séché à l'air en augmentant progressivement la température jusqu'à 300°C pendant une durée totale de 20 heures. Le lingot séché, libéré des plaques, est cuit pendant 2 heures à une température maximale de 1250 à 1280°C, en augmentant la température de 100°C par heure.

Le lingot est écroûté de sorte que ses dimensions soient de 190 x 190 x 35 mm et que sa masse volumique de 144 ± 10 kg/m³ (0,144 ± 0,01 g/cm³) soit homogène.

La résistance à la traction est en moyenne de 0,43 à 0,48 MPa (4,3 à 4,8 kg/cm²) dans la direction "faible" et de 0,60 à 0,65 MPa (6,0 à 6,5 kg/cm²) dans la direction "forte", et la résistance à la flexion est de 0,9 à 1,2 MPa (9 à 12 kg/cm²).

Le retrait linéaire est en général de 6 à 8 % après 36 heures à 1250°C, dans des conditions isothermes. Après cuisson, le matériau est à l'état amorphe ; après 36 heures à 1250°C, la quantité de cristobalite a formée ne dépasse pas 0,5 % en poids.

### Exemple 2 :

535 g de fibres de quartz (identiques à celles de l'exemple 1) sont dispersés dans 11,5 litres d'eau distillée (la concentration des fibres est ainsi de 2,1 % en volume). Ensuite, le procédé est mis en oeuvre comme dans l'exemple 1. De l'eau est ajoutée dans le mélangeur pourvu d'un agitateur à rotation lente pour amener la quantité totale d'eau à 3,8 litres.

L'émulsion est préparée comme dans l'exemple 1. Cette émulsion comprend : 129 g de polyéthoxysiloxane, 240 ml d'alcool éthylique, 5,4 g de bore, 8,5 g de Synthenol® DC10 et 0,7 l d'eau distillée. Comme dans l'exemple 1, la poudre de bore a été au préalable traitée au triméthylchlorosilane. La quantité d'eau ajoutée dans l'émulsion dans la deuxième étape de sa préparation, est de 2,0 l. La concentration des fibres dans la suspension est de 3,5 % en volume. Le mélange de la suspension est effectué comme dans l'exemple 1. La suspension résultante est moulée dans un moule à section carrée, comme dans l'exemple 1, et le lingot résultant a des dimensions de 200 x 200 mm (section transversale) sous un vide de 0,02 MPa, mais la durée d'évacuation de l'eau est portée à 3,5 minutes. Le lingot moulé est enserré et sa hauteur est réglée avec les plaques perforées utilisées à l'exemple 1, de telle sorte qu'elle soit de 80 mm. Le séchage du lingot enserré est effectué pendant un cycle plus long que dans l'exemple 1 (27 heures) en portant progressivement la température à 300°C.

La cuisson à température élevée est effectuée selon le plan d'exécution de l'exemple 1.

Les dimensions finales du lingot après usinage sont de 190 x 190 x 70 mm et sa masse volumique est de 200 ± 20 kg/m³ (0,20 ± 0,02 g/cm³).

La résistance à la traction est en moyenne de 0,65 à 0,70 MPa (6,5 à 7,0 kg/cm²) dans la direction "faible" et de 0,8 à 0,9 MPa (8,0 à 9,0 kg/cm²) dans la direction "forte", et la résistance à la flexion est de 1,8 à 2,0 MPa (18 à 20 kg/cm²). Le retrait linéaire après 36 heures à 1250°C ne dépasse en général pas 4 à 6 % ; la quantité de cristobalite α formée dans ces conditions est de 0,5 à 1,0 % en poids.

## Revendications

1. Procédé de fabrication d'un lingot en matériau isolant thermique à un seul composant fibreux, à base de fibres de quartz, comprenant la succession d'étapes suivante :
- formation d'une dispersion des fibres de quartz dans l'eau, dans un mélangeur pourvu d'un agitateur, jusqu'à formation d'une suspension coulante uniforme,
- élimination d'eau de ladite suspension par versement de la suspension dans un moule à partir duquel on évacue l'eau et obtention d'un bloc fibreux,
- dispersion de ce bloc fibreux dans une quantité mesurée d'eau pour obtenir une dispersion de fibres dans l'eau,
- formation d'un mélange entre cette dispersion de fibres dans l'eau et une émulsion aqueuse contenant un liant organique au silicium, un adjuvant de frittage contenant du bore et un agent tensioactif,
- formation d'un lingot cru à partir de ce mélange dans un moule avec aspiration de l'eau sous vide,
- compression du lingot cru jusqu'à l'obtention de la hauteur désirée et séchage, à l'état comprimé, à une température allant jusqu'à 300°C,
- libération du lingot et cuisson de celui-ci à haute température.

2. Procédé selon la revendication 1, caractérisé en ce qu'on disperse les fibres dans un mélangeur pourvu d'un agitateur à hélice à axe décalé, la vitesse de rotation de l'agitateur étant de 2000 à 3000 tr.min⁻¹ et la concentration des fibres dans l'eau de 1 à 5 % en volume.

3. Procédé selon la revendication 1 ou 2, caractérisé en ce qu'on moule le bloc fibreux dans un moule pourvu d'un fond perforé à partir duquel on évacue l'eau sous un vide de 0,01 à 0,04 MPa.

4. Procédé selon l'une quelconque des revendications 1 à 3, caractérisé en ce qu'on utilise, en tant que liant organique au silicium, une solution alcoolique de polyéthoxysiloxane, la quantité de polyéthoxysiloxane, évaluée en tant que SiO₂, étant de 5 à 25 % en poids par rapport au poids de fibre de quartz.

5. Procédé selon l'une quelconque des revendications 1 à 4, caractérisé en ce que, lorsqu'on utilise du bore amorphe en tant qu'adjuvant de frittage contenant du bore, il est prétraité au moyen d'une solution à 0,5 à 3,0 % en poids de triméthylchlorosilane dans un solvant organique, puis est séché à une température allant jusqu'à 300°C.

6. Procédé selon l'une quelconque des revendications 1 à 5, caractérisé en ce que l'agent tensio-actif est non ionique.

7. Procédé selon l'une quelconque des revendications 1 à 6, caractérisé en ce qu'on forme l'émulsion en mélangeant dans l'eau : une solution alcoolique de polyéthoxysiloxane, un agent tensio-actif et de la poudre de bore amorphe dont le diamètre moyen des particules est de 0,5 à 2,0 µm, durant 1 à 2 minutes, dans un mélangeur dont l'agitateur à hélice présente une vitesse de rotation de 2500 à 4000 tr.min⁻¹, la quantité de bore dans l'émulsion ayant une valeur de 0,5 à 2,5 % en poids par rapport au poids de fibre.

8. Procédé selon l'une quelconque des revendications 1 à 7, caractérisé en ce qu'on accomplit la phase de mélange du bloc fibreux cru dispersé dans l'eau avec l'émulsion, dans un mélangeur pourvu d'un agitateur planétaire dont la vitesse de rotation est de 50 à 150 tr.min⁻¹, à une concentration en fibre de 1,5 à 6,0 % en volume.

9. Procédé selon l'une quelconque des revendications 1 à 8, caractérisé en ce qu'on effectue la compression du lingot cru, moulé entre des plaques perforées, de telle sorte que la hauteur du lingot soit diminuée d'une valeur allant jusqu'à 10 % de sa hauteur initiale.

## Patentansprüche

1. Verfahren zur Herstellung eines Blocks aus einem Wärmeisolierstoff aus einem einzigen Faserbestandteil auf Basis von Quarzfasern, welches nacheinander die folgenden Schritte umfaßt:
- Bildung einer Dispersion dieser Quarzfasern in Wasser in einem mit einem Rührer ausgestatteten Mixer bis zur Bildung einer einheitlichen, fließfähigen Suspension,
- Entfernung des Wassers aus der Suspension durch Eingießen der Suspension in eine Form, aus welcher das Wasser abgeführt wird, und Herstellung eines Faserblocks,
- Verteilung des Faserblocks in einer abgemessenen Menge Wassers, um eine Dispersion der Fasern in dem Wasser zu erzielen,
- Bildung einer Mischung aus der Dispersion der Fasern in Wasser und einer wässrigen, ein Silicium-organisches Bindemittel enthaltenden Emulsion, einem borhaltigen Sinterhilfsstoff und einem Netzhaftmittel,
- Bildung eines Rohblocks aus dieser Mischung in einer Form unter Ansaugen von Wasser im Vakuum,
- Kompression des Rohblocks bis zum Erreichen der gewünschten Höhe und Trocknen in komprimiertem Zustand bei einer bis zu 300°C reichenden Temperatur,
- Entnahme des Blocks und Aushärten desselben bei hoher Temperatur.

2. Verfahren nach Anspruch 1, dadurch gekennzeichnet, daß die Fasern in einem mit einem Spiralrührer mit versetzter Achse ausgestatteten Mixer dispergiert werden, wobei sich die Umdrehungsgeschwindigkeit des Rührers auf 2000 bis 3000 Upm beläuft und die Konzentration der Fasern in Wasser 1 bis 5 Vol.-% beträgt.

3. Verfahren nach Anspruch 1 oder 2, dadurch gekennzeichnet, daß die Formung des Faserblocks in einer Form mit durchlöchertem Boden erfolgt, aus welcher das Wasser im Vakuum bei 0,01 bis 0,04 MPa abgezogen wird.

4. Verfahren nach einem der Ansprüche 1 bis 3, dadurch gekennzeichnet, daß als Silicium-organisches Bindemittel eine alkoholische Lösung aus Polyethoxysiloxan verwendet wird, wobei die Menge an Polyethoxysiloxan, ausgedrückt als SiO₂, 5 bis 25 Gew.-%, bezogen auf das Gewicht der Quarzfasern, beträgt.

5. Verfahren nach einem der Ansprüche 1 bis 4, dadurch gekennzeichnet, daß bei Verwendung von amorphem Bor als borhaltigem Sinterhilfsstoff dieses mit einer 0,5 bis 3 Gew.-%igen Lösung von Trimethylchlorsilan in einem organischen Lösungsmittel vorbehandelt und sodann bei einer bis zu 300°C reichenden Temperatur getrocknet wird.

6. Verfahren nach einem der Ansprüche 1 bis 5, dadurch gekennzeichnet, daß das Netzhaftmittel nichtionogen ist.

7. Verfahren nach einem der Ansprüche 1 bis 6, dadurch gekennzeichnet, daß die Emulsion in Wasser durch Vermischen einer alkoholischen Lösung von Polyethoxysilan, eines Netzhaftmittels und eines Pulvers aus amorphem Bor mit einem mittleren Teilchendurchmesser von 0,5 bis 2 µm während 1 bis 2 Minuten gebildet wird, wobei das Vermischen in einem Mixer erfolgt, dessen Spiralrührer eine Umdrehungsgeschwindigkeit von 2500 bis 4000 Upm aufweist, und wobei das Bor in der Emulsion in einer Menge von 0,5 bis 2,5 Gew.-%, bezogen auf das Fasergewicht, vorliegt.

8. Verfahren nach einem der Ansprüche 1 bis 7, dadurch gekennzeichnet, daß der Mischvorgang des in Wasser dispergierten Rohfaserblocks mit der Emulsion in einem mit einem Rührer mit Umlaufantrieb ausgestatteten Mixer erfolgt, dessen Umlaufgeschwindigkeit bei einer Faserkonzentration von 1,5 bis 6 Vol.-% 50 bis 150 Upm beträgt .

9. Verfahren nach einem der Ansprüche 1 bis 8, dadurch gekennzeichnet, daß die Kompression des zwischen durchlöcherten Platten geformten Rohblocks so erfolgt, daß sich die Höhe des Blocks um einen Betrag bis zu 10% seiner Anfangshöhe verringert.

## Claims

1. Process for the manufacture of a billet of heat insulating material with only one fibrous component, based on quartz fibres, which comprises the successive steps of:
- forming a dispsersion of quartz fibres in water, in a blender having a mixer, until a homogeneous flowing slurry is formed;
- eliminating water form the said slurry by pouring the slurry into a mould from which the water is drained off and obtaining a fibrous block;
- dispersing this fibrous block in a measured amount of water for obtaining a fibre dispersion in water;
- forming a mixture of this fibre dispersion in water, and of an aqueous emulsion containing an organic silicon binder, a boron containing sintering adjuvant and a surface-active agent;
- forming, from this mixture, a green billet in a mould, the water being removed by suction;
- compressing the green billet until the desired height is obtained and drying it, in the compressed state, at a temperature of up to 300°C;
- releasing the billet and firing it at high temperature.

2. Process according to claim 1, characterized in that the fibres are dispersed in a blender provided with a propeller mixer with a shifted axis, the speed of rotation of the mixer being 2000 to 3000 rpm and the fibre concentration in water being from 1 to 5 volume %.

3. Process according to claim 1 or 2, characterized in that the fibrous block is moulded in a mould having a perforated bottom from which the water is removed under a vacuum of 0.01 to 0.04 MPa.

4. Process according to any one of claims 1 to 3, characterized in that there is used, as an organic silicon binder, an alcoholic solution of polyethoxysiloxane, the amount of polyethoxysiloxane, evaluated as SiO₂, being 5 to 25 weight % in relation to the weight of the quartz fibres.

5. Process according to any one of claims 1 to 4, characterized in that, when amorphous boron is used as a boron containing sintering adjuvant, it is pre-treated by means of a solution of 0.5 to 3.0 weight % of trimethylchlorosilane in an organic solvent, and then dried at a temperature of up to 300°C.

6. Process according to any one of claims 1 to 5, characterized in that the surface-active agent is non-ionic.

7. Process according to any one of claims 1 to 6, characterized in that the emulsion is formed by mixing in water: an alcoholic solution of polyethoxysiloxane, a surface-active agent and amorphous boron powder the mean particle diameter of which is 0.5 to 2.0 µm, for 1 to 2 minutes, in a blender the propeller mixer of which has a speed of rotation of 2500 to 4000 rpm, the quantity of boron in the emulsion having a value of 0.5 to 2.5 weight % in relation to the weight of the fibres.

8. Process according to any one of claims 1 to 7, characterized in that the step of mixing the green fibrous block dispersed in water with the emulsion is carried out in a blender provided with a planetary mixer the rotation speed of which is 50 to 150 rpm, at a fibre concentration of 1.5 to 6.0 volume %.

9. Process according to any one of claims 1 to 8, characterized in that the moulded green billet is compressed between perforated plates in such a way that the height of the billet is reduced by a value of up to 10% of its initial height.
